# EUROPEAN PATENT SPECIFICATION

(11) **EP 2 757 411 B1**
(45) Date of publication and mention of the grant of the patent: **08.11.2017**
(21) Application number: 12831156.0
(22) Date of filing: 05.07.2012
(51) Int. Cl.: G02F 1/1362, G02F 1/1335, G02F 1/1333

(54) **ARRAY SUBSTRATE AND LIQUID CRYSTAL DISPLAY PANEL**
ARRAYSUBSTRAT UND FLÜSSIGKRISTALLANZEIGETAFEL
SUBSTRAT DE RÉSEAU ET PANNEAU D'AFFICHAGE À CRISTAUX LIQUIDES

(30) Priority: 16.09.2011 CN 201110274675
(43) Date of publication of application: 23.07.2014
(73) Proprietor: Shanghai Tianma Micro-electronics Co., Ltd., Pudong New District Shanghai 201201 (CN)
(72) Inventor: HUO, Sitao, Shanghai 201201 (CN); JIANG, Wenxin, Shanghai 201201 (CN)
(74) Representative: HGF Limited
(86) International application number: PCT/CN2012/078214
(87) International publication number: WO 2013/037236

(56) References cited:
- CN-A- 1 554 969
- CN-A- 1 573 480
- CN-A- 101 405 648
- JP-A- 2009 282 102
- KR-A- 20070 079 994
- US-A1- 2006 050 208

## Description

This application claims the priority to Chinese Patent Application No.201110274675.1, titled "ARRAY SUBSTRATE AND LIQUID CRYSTAL DISPLAY PANEL", filed with State Intellectual Property Office of PRC on September 16, 2011.

### FIELD OF THE INVENTION

The present invention relates to the field of liquid crystal display, and in particular to an array substrate and a liquid crystal display panel including the array substrate.

### BACKGROUND OF THE INVENTION

A liquid crystal display device has advantages, such as low voltage, micro-power consumption, large display information amount, easiness for colorizing and the like. Currently the liquid crystal display device is widely applied in electronic equipments, such as a computer, an electronic notepad, a mobile phone, a video camera and a high definition television. The liquid crystal display device generally includes a liquid crystal display panel configured to display images and a circuit portion configured to provide signals to the liquid crystal display panel. The liquid crystal display panel generally includes a thin film transistor (TFT) array substrate, an upper substrate and a liquid crystal substance located between the array substrate and the upper substrate.

The liquid crystal display panel is different from a cathode ray tube display device or a plasma display device in that the liquid crystal display panel itself does not emit light, but achieves an objective of display by modulating external light, that is it achieves an objective of display by forming different contrasts for reflection and transmission of external light.

The liquid crystal display panel has a transmission mode and a reflection mode according to different sources of the external light. A transmission type liquid crystal display panel uses a light emitted from a backlight provided by the liquid crystal display device itself for display. Disadvantages of this transmission display mode are that a backlight source has to be in a normally-opened state, leading to large power consumption, and images will be influenced by the external light when the liquid crystal display device is used outdoors, resulting in that the images may not be displayed clearly. However, being different from the transmission type liquid crystal display panel, a reflection type liquid crystal display panel displays an image by reflecting and modulating the external light. An advantage of this reflection display mode is that the power consumption is reduced significantly. But this reflection display mode still has disadvantages. For example, the external light has to be strong enough. Considering the two display modes described above, technicians develop a transflective liquid crystal display panel, in which there are a transmission region and a reflection region in a pixel, and the backlight passes through the transmission region in the transmission mode, and the external light passes through the reflection region in the reflection mode. Therefore the transflective liquid crystal display panel has significant advantages in aspects of readability outdoors and reduction in the power consumption.

A plurality of video signal lines (also known as data lines) and a plurality of scanning lines (also known as gate lines) are provided in intersection on the thin film transistor array substrate. A plurality of regions are divided by these video signal lines and scanning lines. In each region, a pixel electrode and a switching element TFT configured to selectively supply video signals to a pixel unit arc provided, and thereby the pixel unit is formed.

In the prior art, on the thin film transistor array substrate of the transflective liquid crystal display panel, a reflection electrode surrounds generally a transmission electrode in each pixel unit. Therefore the reflection electrodes of adjacent pixel units are adjacent. Moreover, since both of the reflection electrodes are formed by a same conductive layer, in order to avoid a short circuit problem between the two adjacent pixel units, the reflection electrodes of the two pixel units are generally spaced apart. However, such structure of the thin film transistor array substrate may result in a reduced area sum of the reflection region and the transmission region, and thereby the area of the reflection region or the transmission region is reduced. The reduction of the area of any above-mentioned region may result in a reduced utilization ratio of light (aperture ratio).

In view of this, it is necessary to propose a new array substrate and a new liquid crystal display panel including the array substrate so as to solve the problem of low utilization ratio of light (aperture ratio) caused by the existing thin film transistor array substrate.
US 2006/050208 A1 provides a reflective electrode, a transparent electrode, a TFT connected to the reflective electrode and a TFT connected to the transparent electrode formed in each picture element. A first data signal is written into the reflective electrode via the TFT, a second data signal is written into the transparent electrode via the TFT. In this way, the individual data signals are respectively written into the reflective electrode and the transparent electrode, and thereby excellent display quality can be obtained either when used as a transmissive liquid crystal display device or when used as a reflective liquid crystal display device.

### SUMMARY OF THE INVENTION

A problem to be solved by the present invention is to propose a new array substrate and a new liquid crystal display panel including the new array substrate so as to solve the problem of low utilization ratio of light (aperture ratio) of the existing thin film transistor array substrate.

In order to solve the problem described above, the present invention provides an array substrate as claimed in claim 1.

Further preferred embodiments are claimed in the dependent claims.

The present invention further provides a liquid crystal display panel including the array substrate described above.

Alternatively, the liquid crystal display panel further includes a color film substrate. The color film substrate is only provided with a plurality of color photoresists, a planarizing layer and a common electrode of color film substrate, and the plurality of color photoresists correspond to the plurality of pixel units.

### BRIEF DESCRIPTION OF THE DRAWINGS

Fig.1 is a top view of an array substrate according to a first comparative example, which does not form part of the present invention;

Fig.2 is a distribution schematic diagram of a gate line and a common electrode line of an array substrate according to a second comparative example, which does not form part of the present invention;

Fig.3 is a distribution schematic diagram of a data line and a source electrode and a drain electrode of a thin film transistor of the array substrate according to the second comparative example, which does not form part of the present invention;

Fig.4 is a distribution schematic diagram of a via hole corresponding to the drain electrode of the thin film transistor of the array substrate according to the second comparative example, which docs not form part of the present invention;

Fig.5 is a top view of the array substrate according to the second comparative example, which does not form part of the present invention;

Fig.6 is a cross-sectional schematic diagram of the array substrate along line A-A in Fig.5, which does not form part of the present invention;

Fig.7 is a top view of an array substrate according to a third comparative example, which does not form part of the present invention;

Fig.8 is a distribution schematic diagram of a gate line and a common electrode line of the array substrate according to the third comparative example, which does not form part of the present invention;

Fig.9 is a distribution schematic diagram of a data line and a source electrode and a drain electrode of a thin film transistor of the array substrate according to the third comparative example, which does not form part of the present invention;

Fig.10 is a distribution schematic diagram of a via hole corresponding to the drain electrode of the thin film transistor according to the third comparative example, which does not form part of the present invention;

Fig.11 is a distribution schematic diagram of a gate line and a common electrode line of an array substrate according to an embodiment;

Fig.12 is a distribution schematic diagram of a data line and a source electrode and a drain electrode of a thin film transistor of the array substrate according to the embodiment;

Fig.13 is a distribution schematic diagram of a via hole corresponding to the drain electrode of the thin film transistor according to the embodiment;

Fig.14 is a top view of the array substrate according to the embodiment; and

Fig.15 is an enlarged structure schematic diagram of the region Q in Fig.14.

### DETAILED DESCRIPTION OF THE INVENTION

As described in the background of the invention, in each pixel unit of an array substrate of the existing transflective liquid crystal display panel, a reflection electrode surrounds a transmission electrode. Therefore the reflection electrodes of adjacent pixel units are adjacent. Since both of the reflection electrodes of adjacent pixel units are formed by a same layer of metal, in order to avoid a short circuit of the reflection electrodes of the two adjacent pixel units, it is required that the reflection electrodes of the two pixel units are spaced apart so as to achieve an insulating effect.

An inventor of the present invention proposes a new array substrate of transflective liquid crystal display panel, in which a distance between adjacent pixel units is reduced, and therefore an aperture ratio of the pixel unit is increased.

In order to make above-mentioned objectives, features and advantages of the present invention to become more apparent and easy to understand, embodiments of the present invention and comparative examples will be described in detail in conjunction with the accompanying drawings as follows. Since it is mainly focused on describing the principle of the present invention, the drawings are not made in proportion.

A First Comparative Example, which does not form part of the present invention

An array substrate includes a plurality of pixel units arranged in a matrix which are defined by intersection of a plurality of gate lines provided in a row direction and a plurality of data lines provided in a column direction. Each of the pixel units includes a first pixel unit and a second pixel unit. A reflection electrode is provided at an edge region of the first pixel unit, and a transmission electrode is provided at an edge region of the second pixel unit.

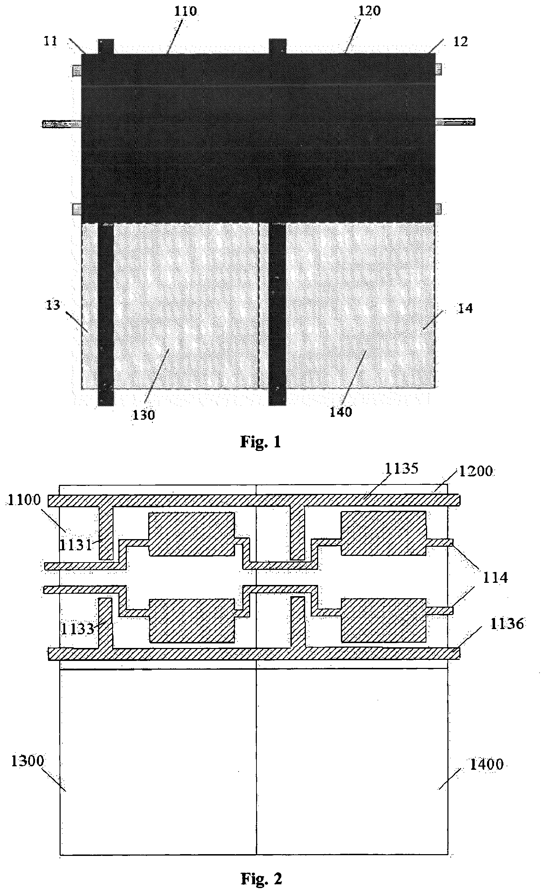

Referring to Fig.1, in order to describe conveniently, two first pixel units 11 and 12 and two second pixel units 13 and 14 are taken as an example in the first comparative example, and other regions may be treated as repeats or other arrangement manner of the four pixel units in the row and column directions. The first pixel unit 11 is provided to be adjacent to the second pixel unit 13, and the first pixel unit 12 is also provided to be adjacent to the second pixel unit 14.

As shown in Fig.1, in the first comparative example, a reflection electrode is provided in the central region of the first pixel unit 11. The reflection electrode in the central region and a reflection electrode in the edge region of the first pixel unit 11 arc provided on a same metal layer and are formed in a same process step, and together form a reflection electrode 110 of the first pixel unit 11. Similarly, reflection electrodes located in the central region and edge region of the first pixel unit 12 are also formed synchronously and together form a reflection electrode 120 of the first pixel unit 12.

A transmission electrode is provided in the central region of the second pixel unit 13. The transmission electrode in the central region and a transmission electrode in the edge region of the second pixel unit 13 are provided on a same transparent conductive layer and are formed in a same process step and together form a transmission electrode 130 of the second pixel unit 13. Similarly, transmission electrodes located in the central region and edge region of the second pixel unit 14 are also formed synchronously and together form a transmission electrode 140 of the second pixel unit 14.

At an edge where the first pixel unit 11 is adjacent to the second pixel unit 13, there is provided an insulating layer, which is configured to electrically insulate the reflection electrode 110 from the transmission electrode 130. Specifically, the transmission electrode 130 is provided at a lower layer, the insulating layer is provided above the transmission electrode 130, and the reflection electrode 110 is provided above the insulating layer, thereby achieving electrically insulating the transmission electrode 130 from the reflection electrode 110. Similarly, an edge where the first pixel unit 12 is adjacent to the second pixel unit 14 is also provided with an insulating layer, which is configured to electrically insulate the reflection electrode 120 from the transmission electrode 140.

The reflection electrode is adjacent to the transmission electrode between the first pixel unit and the second pixel unit which are adjacent to each other by a design described above. The reflection electrode is generally a metal layer. The transmission electrode is generally a transparent conductive layer such as indium oxide tin layer. The reflection electrode and the transmission electrode are not provided on a same layer, and the reflection electrode is spaced from the transmission electrode with an insulating layer so as to make them to be insulated from each other. Therefore, the first pixel unit and the second pixel unit which are adjacent to each other are not required to be spaced apart. The transmission electrode and the reflection electrode located in edge regions of the first pixel unit and the second pixel unit which are adjacent to each other can be directly adjacent to each other and even may be overlapped partly. Thus, a display aperture ratio is increased while reducing a requirement for accuracy of manufacturing process.

### A Second Comparative Example, which does not form part of the present invention

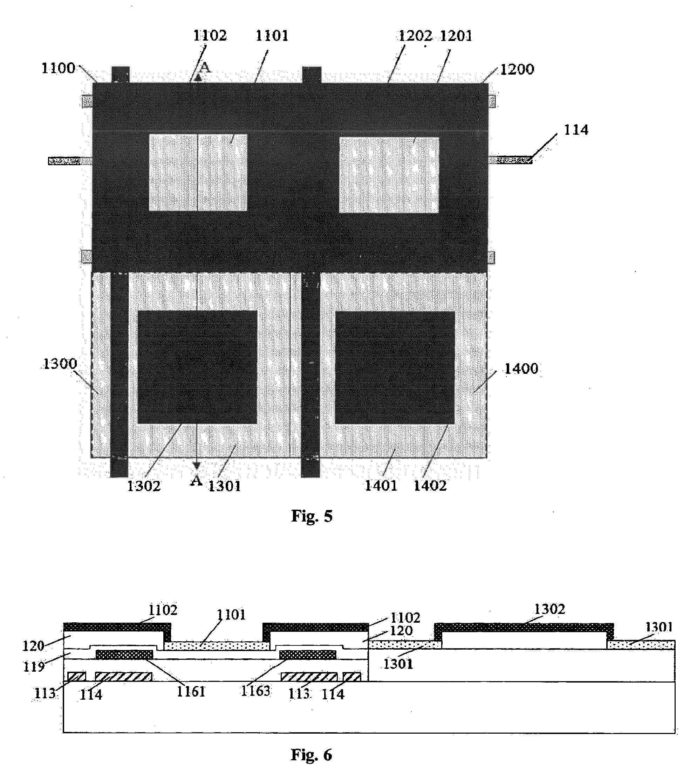

Fig.2 to Fig.5 are structure schematic diagrams of different layers of an array substrate according to the second comparative example. Fig.6 is a cross-sectional schematic diagram of the array substrate along line A-A in Fig.5. In order to make a layout of data lines, gate lines, thin film transistors and storage capacitors of the array substrate illustrated in the second embodiment to be clearer, a detailed description will be given in conjunction with Fig.2 to Fig.6 hereinafter.

First, reference is made to Fig.5, which is a top view of the array substrate according to the second comparative example. As shown in Fig.5, the array substrate according to the second comparative example includes four pixel units: a first pixel unit 1100, a first pixel unit 1200, a second pixel unit 1300 and a second pixel unit 1400. The first pixel units are arranged in rows. Only two first pixel units are shown in Fig.5, and other first pixel units arranged with the first pixel unit 1100 and the first pixel unit 1200 in a same row may further be included. The second pixel units are arranged in rows. Only two second pixel units are shown in Fig.5, but other second pixel units arranged with the second pixel unit 1300 and the second pixel unit 1400 in a same row may further be included. Furthermore the row of the first pixel units and the row of the second pixel units are spaced apart in a row direction.

An edge region of the first pixel unit 1100 is provided with a reflection electrode 1102, the central region of the first pixel unit 1100 is provided with a rectangular transmission electrode 1101, and the reflection electrode 1102 and the transmission electrode 1101 are electrically connected. An edge region of the first pixel unit 1200 is provided with a reflection electrode 1202, the central region of the first pixel unit 1200 is provided with a rectangular transmission electrode 1201, and the reflection electrode 1202 and the transmission electrode 1201 are also electrically connected. Alternatively, the transmission electrode 1201 and the transmission electrode 1101 may be in other shapes such as rhombus or circle.

An edge region of the second pixel unit 1300 is provided with a transmission electrode 1301, the central region of the second pixel unit 1300 is provided with a rectangular reflection electrode 1302, and the reflection electrode 1302 and the transmission electrode 1301 are electrically connected. An edge region of the second pixel unit 1400 is provided with a transmission electrode 1401, the central region of the second pixel unit 1400 is provided with a rectangular reflection electrode 1402, and the reflection electrode 1402 and the transmission electrode 1401 are also electrically connected. The reflection electrode 1302 and the reflection electrode 1402 may also be other shapes, such as rhombus or circle.

As an example, the areas of all reflection electrodes are the same, and the areas of all transmission electrodes are also the same in the second comparative example. Thereby uniformity of display can be increased.

The gate line driving the row of the first pixel units is provided under the reflection electrode located in the edge region of each of the first pixel units in the row of the first pixel units and is sheltered by the reflection electrodes. As shown in Fig.2 and Fig.5, a part of a gate line 1135, in the first pixel unit 1100 and the first pixel unit 1200, for driving the row of the first pixel units is provided under the reflection electrode 1102 located in the edge region of the first pixel unit 1100 and the reflection electrode 1202 located in the edge region of the first pixel unit 1200. Only two first pixel units are shown in Fig.2 to Fig.5. Similarly, in the case that more first pixel units are arranged in the row direction, the gate line controlling the row of the first pixel units is provided under the reflection electrode located in the edge region of each of the first pixel units, that is, the gate line is sheltered completely by the reflection electrodes.

The gate line driving the row of the second pixel units is provided under the reflection electrode located in the edge region of each of the first pixel units in the row of the first pixel units which is adjacent to the row of the second pixel units and is sheltered by the reflection electrodes. As shown in Fig.2 and Fig.5, a gate line 1136 driving the second pixel unit 1300 and the second pixel unit 1400 is provided under the reflection electrode 1102 located in the edge region of the first pixel unit 1100 and the reflection electrode 1202 located in the edge region of the first pixel unit 1200 of the row of the first pixel units which is adjacent to the second pixel unit 1300 and the second pixel unit 1400. In the case that more second pixel units are arranged in the row direction, the gate line controlling the row of the second pixel units is provided under the reflection electrode located in the edge region of each of the first pixel units in the row of the first pixel units which is adjacent to the row of the second pixel units, that is the gate line is sheltered completely by the reflection electrodes of adjacent row.

Such layout of the gate line 1135 and the gate line 1136 is to increase the aperture ratio of the pixel units. Specifically, since the gate line is of a metal wiring, the gate line may occupy a certain aperture ratio in the conventional design of the prior art, therefore a display area is influenced. In the present invention, the display area occupied by the gate line is greatly reduced by the layout described above.

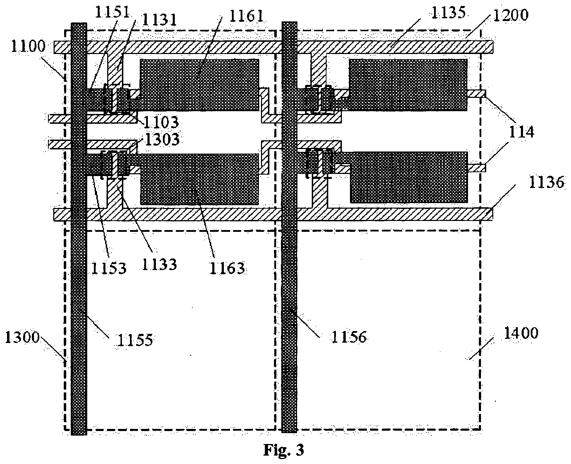

Referring to Fig.3 and Fig.5, a data line is formed after the gate line and the gate electrode insulating layer are formed. The first pixel unit 1100 and the second pixel unit 1300 are driven by a same data line 1155; similarly, the first pixel unit 1200 and the second pixel unit 1400 are driven by a same data line 1156. A part of the data line 1155 in the first pixel unit 1100 and a part of the data line 1156 in the first pixel unit 1200 are provided under the reflection electrode 1102 located in the edge region of the first pixel unit 1100 and the reflection electrode 1202 located in the edge region of the first pixel unit 1200 respectively, and are sheltered by the reflection electrodes. In the present example, except that the data line provided in the second pixel unit 1300 and the second pixel unit 1400 may influence the aperture ratio of the pixel units, the aperture ratio occupied by the data line is reduced overall in comparison with the conventional design of the prior art.

The thin film transistors are further provided in each pixel unit. In the conventional design, the thin film transistors controlling the pixel units may also occupy a certain aperture ratio. In order to further increase the aperture ratio, in the array substrate according to the present second comparative example, the thin film transistor driving the first pixel unit is provided under the reflection electrode located in the edge region of the first pixel unit, and the thin film transistor driving the second pixel unit is provided under the reflection electrode located in the edge region of the first pixel unit which are adjacent to the second pixel unit.

Specifically, referring to Fig.2, Fig.3 and Fig.5, and taking adjacent the first pixel unit 1100 and the second pixel unit 1300 as an example, a thin film transistor 1103 driving the first pixel unit 1100 is provided under the reflection electrode 1102 located in the edge region of the first pixel unit 1100, and a thin film transistor 1303 driving the second pixel unit 1300 is also provided under the reflection electrode 1102 located in the edge region of the first pixel unit 1100.

The thin film transistor 1103 and the thin film transistor 1303 each include a gate electrode, a gate electrode insulating layer, a semiconductor layer, a source electrode and a drain electrode. Specifically, a gate electrode 1131 of the thin film transistor 1103 is formed by a part of the gate line 1135 extending towards interior of the first pixel unit 1100; a gate electrode 1133 of the thin film transistor 1303 is formed by a part of the gate line 1136 extending towards interior of the first pixel unit 1100. A source electrode 1151 of the thin film transistor 1103 is formed by the data line 1155 extending towards interior of the first pixel unit 1100 to an overlapped place with the gate electrode 1131; a source electrode 1153 of the thin film transistor 1303 is formed by the data line 1155 extending towards interior of the first pixel unit 1100 to an overlapped place with the gate electrode 1133. At a same time of forming the source electrode 1151 and the source electrode 1153, a drain electrode 1161 of the thin film transistor 1103 and a drain electrode 1163 of the thin film transistor 1303 are also formed. The drain electrode 1161 and the gate electrode 1131 are overlapped. The drain electrode 1163 and the gate electrode 1133 are overlapped.

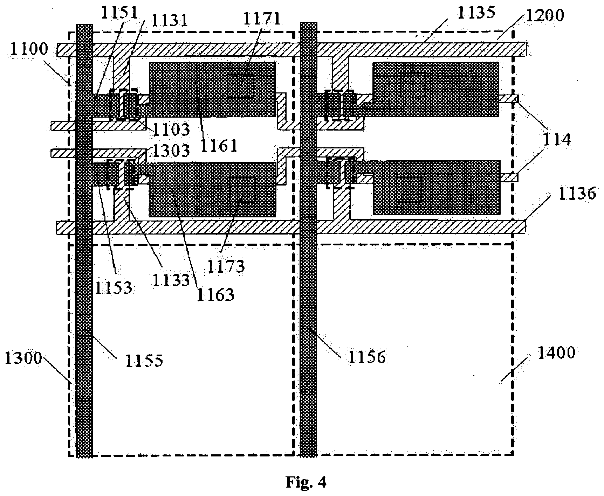

Referring to Fig.4 and Fig.5, a passivation layer 119 is formed on the structure shown in Fig.3, and a via hole 1171 and a via hole 1173 are respectively dug in the passivation layers 119 of the drain electrode 1161 of the first pixel unit 1100 and the drain electrode 1163 of the second pixel unit 1300. The transmission electrode 1101 is electrically connected with the drain electrode 1161 by the via hole 1171, and the transmission electrode 1301 is electrically connected with the drain electrode 1163 by the via hole 1173.

In the process of controlling liquid crystal molecules by the array substrate together with an upper substrate (for example, color film substrate), an equivalent circuit of the array substrate and the upper substrate is one capacitor which is known as a liquid crystal capacitor. However the liquid crystal capacitor can not retain a voltage to a time when the data line updates an image next time. In other words, after the liquid capacitor is charged by the thin film transistor, the liquid crystal capacitor can not retain the voltage until the time when the thin film transistor charges the pixel unit again. Since a variation of the voltage may result in a variation of display of the liquid crystal, therefore on the array substrate, it is generally required to provide a storage capacitor configured to retain the voltage until the thin film transistor charges the pixel unit again.

In order to increase the aperture ratio of the pixel unit, in the present second comparative example, the storage capacitor is provided under the reflection electrode of the pixel unit. Specifically, referring to Fig.2 to Fig.6, in the present example, a storage capacitor of the first pixel unit 1100 and a storage capacitor of the second pixel unit 1300 which are adjacent to the first pixel unit 1100 are formed under the reflection electrode 1102 located in the edge region of the first pixel unit 1100; a storage capacitor of the first pixel unit 1200 and a storage capacitor of the second pixel unit 1400 which are adjacent to the first pixel unit 1200 are formed under the reflection electrode 1202 located in the edge region of the first pixel unit 1200.

In the process of manufacturing the array substrate, the gate line is generally provided at a surface of a glass substrate, and a common electrode line 114 is also provided at the same layer with the gate line. The common electrode line 114 may serve as the lower plate of the storage capacitor. The upper plate of the storage capacitor may be the drain electrode of the thin film transistor. Since the storage capacitor does not occupy the aperture ratio, a larger storage capacitor may be provided within an acceptable limit to the area of the reflection electrode so as to increase a capacity of the pixel unit to retain voltage.

A structure shown in Fig.6 is a cross-sectional view along A-A straight line in Fig.5. Taking adjacent the first pixel unit 1100 and the second pixel unit 1300 as an example, in the first pixel unit 1100, the common electrode line 114 and the drain electrode 1161 form the storage capacitor of the first pixel unit 1100, the common electrode line 114 and the drain electrode 1163 form the storage capacitor of the second pixel unit 1300. In the first pixel unit 1100, an organic film 120 is formed on the transmission electrode 1101 and the passivation layer 119. The organic film 120 is provided with the reflection electrode 1102, and the reflection electrode 1102 is electrically connected with the transmission electrode 1101. At a same time, an organic film 120 is also formed simultaneously between the reflection electrode 1202 of the first pixel unit 1100 and the transmission electrode 1301 of the second pixel unit 1300 which is adjacent to the first pixel unit 1100 in the column direction.

Inside the pixel unit, the function of the organic film is to adjust the cell gap of the reflection electrode to be a half of the cell gap of the transmission electrode, and it has a function of adjusting an optical path difference. At a same time, the adjacent reflection electrode and transmission electrode at the edge of the pixel unit may be overlapped partly, and the thin film transistor of the second pixel unit is provided under the reflection electrode of the first pixel unit which is adjacent to the second pixel unit. As shown in Fig.5, the thin film transistor 1303 of the second pixel unit 1300 is provided under the reflection electrode 1102 located in the edge region of the first pixel unit 1100, and a part of the transmission electrode 1301 of the second pixel unit 1300 is required to extend to a place where is under the reflection electrode 1102 of the first pixel unit 1100 to connect the drain electrode 1163 of the thin film transistor 1303, therefore the reflection electrode 1102 and the transmission electrode 1301 are overlapped partly. The organic film may make the transmission electrode and the reflection electrode located in the edge region to be insulated from each other, and the organic film is equivalent to the insulating layer in the first comparative example. That is, the insulating layer in the second comparative example is the organic film, and a thickness of the organic film 120 is generally about 200µm, this may ensure that a crosstalk interference brought by two overlaps above is very small, and an operation of the array substrate is not influenced. A Third Comparative Example, which does not form part of the present invention

The third comparative example differs from the second comparative example in that a first pixel unit and a second pixel unit are all arranged in columns and the column of the first pixel units and the column of the column of the second pixel units are spaced apart in a column direction.

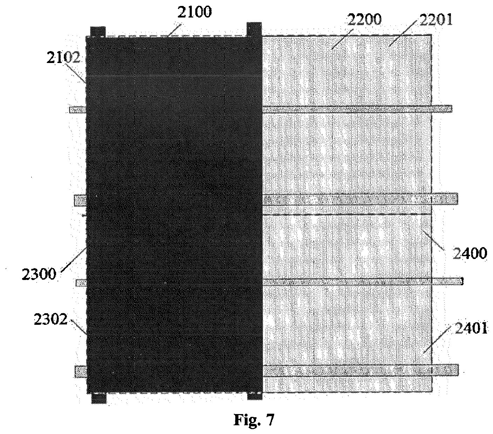

Specifically, a top view of an array substrate formed by the column of the first pixel units and the column of the second pixel units which are spaced apart in the column direction is as shown in Fig.7. The central region of a first pixel unit 2100 is provided with a reflection electrode. The reflection electrode located in the central region and a reflection electrode located in an edge region of the first pixel unit 2100 are formed by a same reflection metal layer and connect together to form a reflection electrode 2012. The layout of a first pixel unit 2300 is same as the layout of the first pixel unit 2100. The central region of a second pixel unit 2200 is also provided with a transmission electrode. The transmission electrode located in the central region and a transmission electrode located in an edge region of the second pixel unit 2200 are formed by a same transparent conductive layer and connect together to form a transmission electrode 2201. The layout of a second pixel unit 2400 is same as the layout of the second pixel unit 2200.

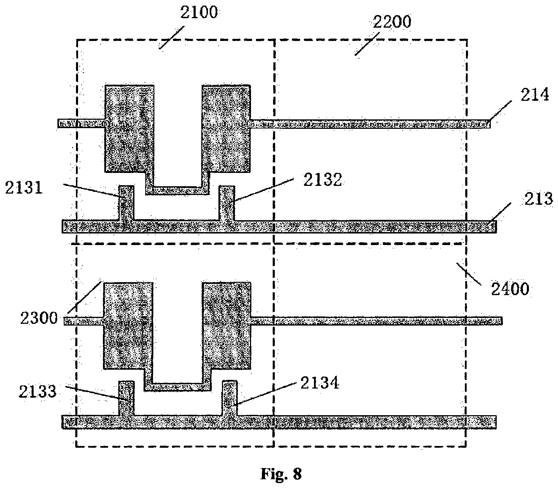

Arranging in columns and spacing apart of the first pixel units and the second pixel units may make a layout of a data line, a gate line, a thin film transistor and a storage capacitor in the array substrate to be different from that in the second comparative example. A detailed description will be performed in conjunction with Fig.7 to Fig. 10 hereinafter.

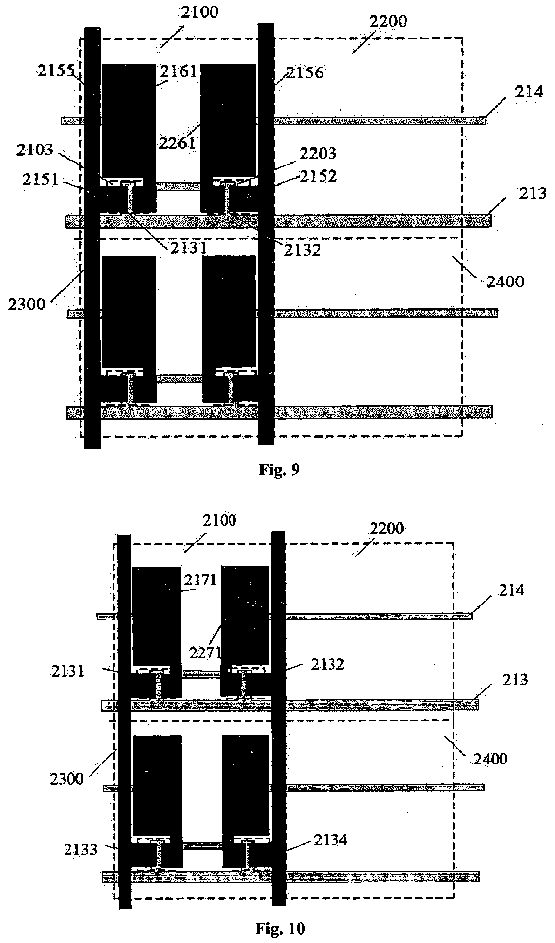

Referring to Fig.7 and Fig.9, a data line 2155 driving the column of the first pixel units (only the first pixel unit 2100 and the first pixel unit 2300 are shown in the figure) is provided under the reflection electrode (only a reflection electrode 2102 and a reflection electrode 2302 are shown in the figure) located in the edge region of each of the first pixel unit in the column of the first pixel units. A data line 2156 driving the column of the second pixel units (only the second pixel unit 2200 and the second pixel unit 2400 are shown in the figure) is provided under the reflection electrode (only the reflection electrode 2102 and the reflection electrode 2302 are shown in the figure) of the first pixel units adjacent to the column of the second pixel units. By the layout described above, each data line is provided under the reflection electrode of the column of the first pixel units, is sheltered by a reflection metal and does not occupy the area of transmission light, and an aperture ratio is greatly increased.

Similar to the second comparative example, the thin film transistor controlling the first pixel unit is provided under the reflection electrode located in the edge region of the first pixel unit, the thin film transistor controlling the second pixel unit is provided under the reflection electrode located in the edge region of the first pixel unit which is adjacent to the second pixel unit. In the present third comparative example, as shown in the figure, a thin film transistor 2103 driving the first pixel unit 2100 is provided under the reflection electrode 2102 of the first pixel unit 2100, and a thin film transistor 2203 driving the second pixel unit 2200 is also provided under the reflection electrode 2102 of the first pixel unit 2100.

Specifically, the thin film transistor includes a gate electrode, a gate electrode insulating layer, a semiconductor layer, a source electrode and a drain electrode. A gate electrode 2131 and a gate electrode 2132 are respectively formed by a part of a gate line 213 extending towards interior of the first pixel unit 2100; a source electrode 2151 is formed by the data line 2155 driving the first pixel unit 2100 extending towards interior of the first pixel unit 2100; a source electrode 2152 is formed by the data line 2156 driving the second pixel unit 2200 extending towards interior of the first pixel unit 2100. A drain electrode 2161 and a drain electrode 2261 are also formed while the source electrode is formed.

Referring to Fig.10, a passivation layer is formed on a structure shown in Fig.9, and a via hole 2171 configured to electrically connect the reflection electrode 2102 and the drain electrode 2161 is formed in the passivation layer; a via hole 2271 configured to electrically connect the transmission electrode 2201 and the drain electrode 2261 is also formed.

Similar to the second comparative example, a storage capacitor of the first pixel unit is provided under the reflection electrode located in the edge region of the first pixel unit, and a storage capacitor of the second pixel unit is provided under the reflection electrode located in the edge region of the adjacent first pixel unit. Specifically, referring to Fig.7 to Fig. 10, in the present example, a storage capacitor of the first pixel unit 2100 and a storage capacitor of the second pixel unit 2200 which is adjacent to the first pixel unit 2100 are all formed under the reflection electrode 2102 of the first pixel unit 2100; a storage capacitor of the first pixel unit 2300 and a storage capacitor of the second pixel unit 2400 which is adjacent to the first pixel unit 2300 are all formed under the reflection electrode 2302 of the first pixel unit 2300.

Similar to the second comparative example, in the present third an alternative solution that the central region of the first pixel unit is also provided with the reflection electrode and the central region of the second pixel unit is also provided with the transmission electrode may be that the central region of the first pixel unit is provided with the transmission electrode and the central region of the second pixel unit is provided with the reflection electrode, by which an effect of display may be further increased.

### An Embodiment

First pixel units and second pixel units in an array substrate according to the embodiment are all spaced apart in the row and column directions, in other words, pixel units which are adjacent to the first pixel unit in upper, lower, left and right directions are all the second pixel units, pixel units which are adjacent to the second pixel unit in upper, lower, left and right directions are also all the first pixel units.

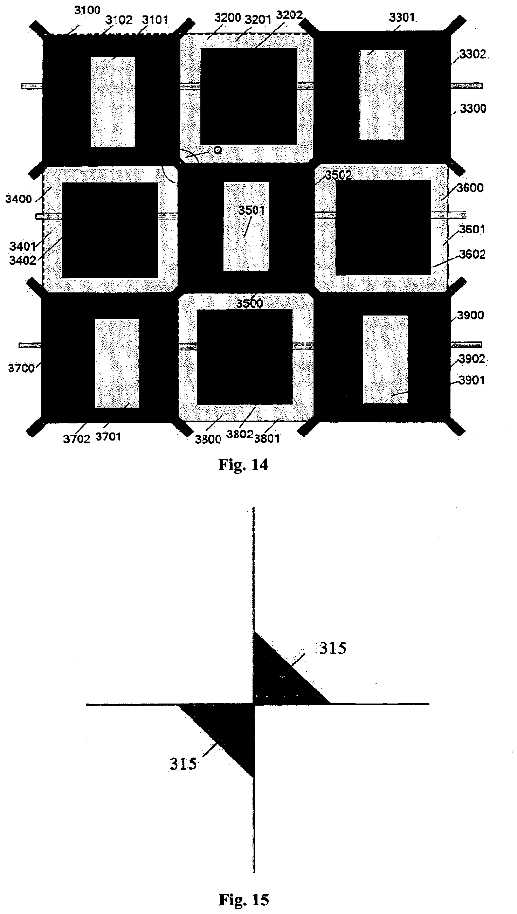

Specifically, referring to Fig.14, the array substrate according to the embodiment includes a first pixel unit 3100, a first pixel unit 3300, a first pixel unit 3500, a first pixel unit 3700, a first pixel unit 3900, a second pixel unit 3200, a second pixel unit 3400, a second pixel unit 3600, and a second pixel unit 3800. The first pixel units and the second pixel units are all spaced apart in the row and column directions. By a design described above, so that the pixel units which are adjacent to the first pixel unit in upper, lower, left and right directions are all the second pixel units, and the pixel units which are adjacent to the second pixel unit in upper, lower, left and right directions are also all the first pixel units. For example, the first pixel unit 3500 is respectively adjacent to the second pixel unit 3200, the second pixel unit 3800, the second pixel unit 3400, and the second pixel unit 3600 in upper, lower, left and right directions; the second pixel unit 3600 is respectively adjacent to the first pixel unit 3300, and the first pixel unit 3900 and the first pixel unit 3500 in upper, lower and left directions. The second pixel unit 3600 is also adjacent to a first pixel unit, which is not shown in Fig.14, in right direction.

In the array substrate according to the embodiment, the pixel units which are adjacent to the first pixel unit in upper, lower, left and right directions are all the second pixel units, the pixel units which are adjacent to the second pixel unit in upper, lower, left and right directions are also all the first pixel units, therefore reflection electrodes and transmission electrodes are directly adjacent to each other in four directions. Since the reflection electrodes are formed from metals, the transmission electrodes are formed from transparent conductive substances such as indium oxide tin, the reflection electrodes and the transmission electrodes are not provided on a same layer, and an insulating layer is provided between the reflection electrodes and the transmission electrodes to insulate them from each other, therefore it is not necessary for the adjacent pixel units in four directions to be spaced apart, the transmission electrodes and the reflection electrodes located in edge regions of the adjacent pixel units may be directly adjacent to each other and even may be overlapped partly, thereby a display aperture ratio is reduced and also a requirement of accuracy of manufacturing process is reduced.

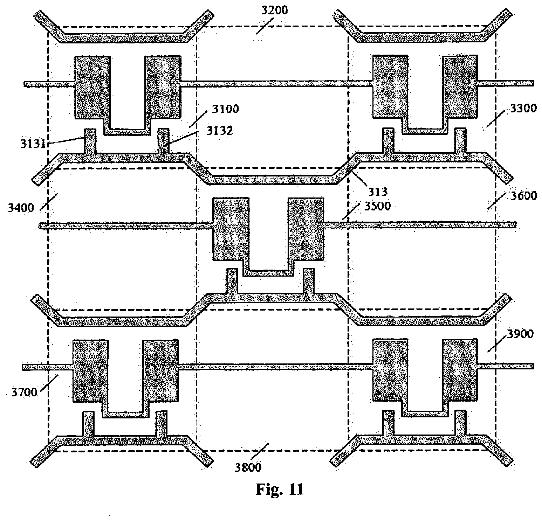

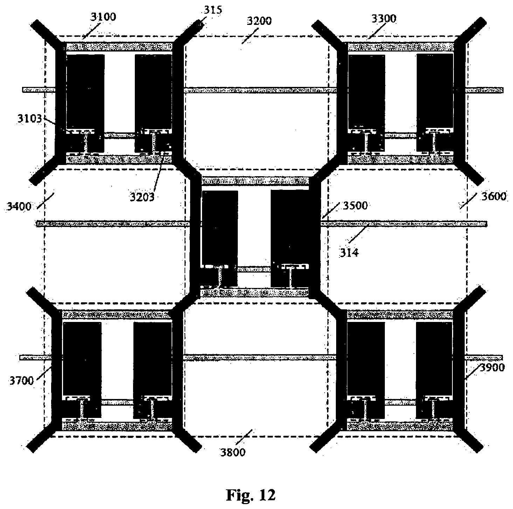

Since the first pixel units and the second pixel units are all spaced apart in the row and column directions, a layout of data lines, gate lines, thin film transistors and storage capacitors in the array substrate in the present embodiment is different from that in the second and third comparative examples. In the following, a detailed description will be performed in conjunction with Fig.11 to Fig.15. Fig.12 to Fig.14 are structure schematic diagrams of three different layers of the array substrate, and Fig.15 is an enlarged structure schematic diagram of a region Q in Fig. 14.

Referring to Fig.11 and Fig.14, a plurality of gate lines are arranged in a polyline, are provided in parallel under the reflection electrodes located in the edge regions of a plurality of first pixel units in two adjacent rows of the pixel units, and are connected with a deflection at adjacent corners of two first pixel units whose corners are adjacent in two adjacent rows of the pixel units. Specifically, for example, for a gate line 313, there are a plurality of segments provided in parallel under a reflection electrode 3102 located in an edge region of the first pixel unit 3100, under a reflection electrode 3502 located in an edge region of the first pixel unit 3500, and under a reflection electrode 3302 located in an edge region of the first pixel unit 3300; the gate line 313 is connected with a deflection at adjacent corners of the first pixel unit 3100 and the first pixel unit 3500 whose corners are adjacent in two adjacent rows of the pixel units, connects two portions provided in parallel under the reflection electrode 3102 and the reflection electrode 3502, is connected with a deflection at adjacent corners of the first pixel unit 3500 and the first pixel unit 3300 whose corners are adjacent, and connects two portions provided in parallel under the reflection electrode 3502 and the reflection electrode 3302. In the present invention, by a layout described above, the area occupied by the gate line 313 may be greatly reduced. In the present embodiment, the gate line 313 only occupies a very small aperture ratio at corners of a transmission electrode 3201 of the second pixel unit 3200, a transmission electrode 3401 of the second pixel unit 3400 and a transmission electrode 3601 of the second pixel unit 3600. A display area is greatly increased in comparison with the prior art.

Accordingly, the data line may also be provided in a same method as above. A plurality of data lines are provided in a polyline, are provided in parallel under the reflection electrodes located in the edge regions of the plurality of first pixel units in two adjacent columns of the pixel units, and are connected with a deflection at adjacent corners of two first pixel units whose corners are adjacent in two adjacent rows of the pixel units. Specifically, referring to Fig. 12 and Fig. 14, a data line 315 is provided in a polyline in the row direction, the data line 315 is provided in parallel under the reflection electrode 3102 located in the edge region of the first pixel unit 3100, under the reflection electrode 3502 located in the edge region of the first pixel unit 3500, and under a reflection electrode 3802 of the first pixel unit 3800; the data line 315 is deflected at adjacent corners of the first pixel unit 3100 and the first pixel unit 3500 whose corners are adjacent, is deflected at adjacent corners of the first pixel unit 3500 and the first pixel unit 3700 whose corners are adjacent, to connect the parallel portions. The deflection portions of the data line 315 and the deflection portions of the gate line 313 may be superposed in transmission light direction, and do not additionally occupy an aperture ratio (as shown in Fig. 15).

In order to further increase the aperture ratio, in the array substrate according to the present embodiment, a thin film transistor controlling the first pixel unit is provided under the reflection electrode located in the edge region of the first pixel unit, and a thin film transistor controlling the second pixel unit is provided under the reflection electrode located in the edge region of the first pixel unit.

Specifically, referring to Fig.11 to Fig.14, taking the first pixel unit 3100 and the second pixel unit 3200 which are adjacent to each other in a same row as an example, a thin film transistor 3103 driving the first pixel unit 3100 is provided under the reflection electrode 3102 located in the edge region of the first pixel unit 3100, and a thin film transistor 3203 driving the second pixel unit 3200 is also provided under the reflection electrode 3102 located in the edge region of the first pixel unit 3100. In the present embodiment, a layout of gate electrodes, drain electrodes and source electrodes of the thin film transistor is same as that in the third embodiment, and a thin film transistor of the second pixel unit is provided under the reflection electrode located in the edge region of the first pixel unit which is adjacent to the second pixel unit in left and right directions, which can be made reference to the third comparative example. Alternatively, the thin film transistor of the second pixel unit can also be provided under the reflection electrode located in the edge region of the first pixel unit which is adjacent to the second pixel unit in upper and lower directions, which can be made reference to the second comparative example specifically.

In order to increase the aperture ratio in the transmission region, in the present invention, a storage capacitor of the first pixel unit is provided under the reflection electrode located in the edge region of the first pixel unit; a storage capacitor of the second pixel unit is provided under the reflection electrode located in the edge region of the first pixel unit which is adjacent to the second pixel unit. Specifically, referring to Fig.11 to Fig.14, in the present embodiment, a storage capacitor of the first pixel unit 3100 and a storage capacitor of the second pixel unit 3200 which is adjacent to the first pixel unit 3100 arc all provided under the reflection electrode 3102 located in the edge region of the first pixel unit 3100. In the present embodiment, a layout of the storage capacitor is same as that in the third comparative example. A storage capacitor of the second pixel unit is provided under the reflection electrode located in the edge region of the first pixel unit which is adjacent to the second pixel unit in left and right directions, which can be made reference to the third comparative example specifically. Alternatively, the storage capacitor of the second pixel unit can also be provided under the reflection electrode located in the edge region of the first pixel unit which is adjacent to the second pixel unit in upper and lower directions, which can be made reference to the second comparative example specifically.

In the present embodiment, in order to increase a display effect of the pixel unit, the central region of the first pixel unit is provided with a transmission electrode, and the transmission electrode and the reflection electrode located in the edge region of the first pixel unit arc electrically connected; the central region of the second pixel unit is provided with a reflection electrode, and the reflection electrode and the transmission electrode located in the edge region of the second pixel unit are electrically connected.

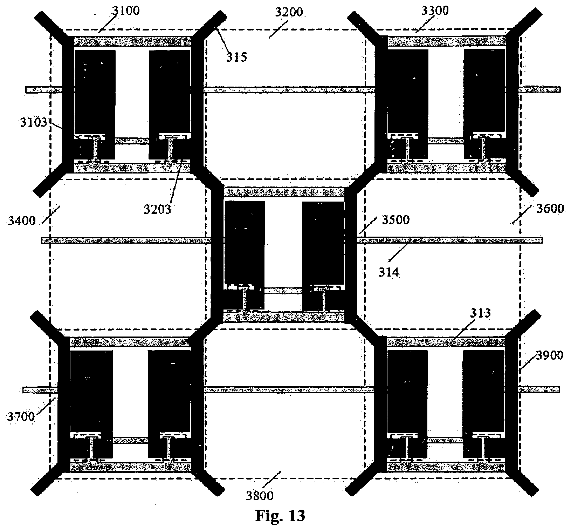

Referring to Fig.13, a passivation layer is formed on a structure shown in Fig.12, and via holes configured to electrically connect the drain electrodes and the transmission electrodes of all pixel units are formed in the passivation layer.

Referring to Fig.14, the central region of the first pixel unit 3100 is provided with a transmission electrode 3101, and the transmission electrode 3101 and the reflection electrode 3102 located in the edge region are electrically connected; layouts of the first pixel unit 3300, the first pixel unit 3500, the first pixel unit 3700 and the first pixel unit 3900 are same as that of the first pixel unit 3100, and a detailed description is not given again herein. The central region of the second pixel unit 3200 is provided with a reflection electrode 3202, and the reflection electrode 3202 and the transmission electrode 3201 located in the edge region are electrically connected; layouts of the second pixel unit 3200, the second pixel unit 3400, the second pixel unit 3600 and the second pixel unit 3800 are same as that of the second pixel unit 3200, and a detailed description is not given again herein.

In the present embodiment, the transmission electrode 3101, a transmission electrode 3301, a transmission electrode 3501, a transmission electrode 3701 and a transmission electrode 3901 are presented as rectangles. In other embodiments, these transmission electrodes may be presented as circles or rhombuses according to a requirement. In the present embodiment, the reflection electrode 3202, a reflection electrode 3402, a reflection electrode 3602 and a reflection electrode 3802 are presented as rectangles. In other embodiments, these reflection electrodes may be presented as circles or rhombuses according to a requirement.

In the present embodiment according to the invention, since the reflection electrode and the transmission electrode are all provided in one pixel unit, it may not only achieve a transmission display but also achieve a reflection display by an individual pixel unit. In comparison with the array substrate in the first comparative example, in which either the transmission display is achieved or the reflection display is achieved in one pixel unit, in the case where other conditions are same, a resolution of the array substrate in the present embodiment is increased twice, and a better display effect is achieved.

Since the reflection electrode relies on an external light for display and the transmission electrode relies on a backlight for display, and in normal cases, a brightness of the external light is inconsistent with that of the backlight, therefore a brightness displayed by the reflection electrode is also inconsistent with that displayed by the transmission electrode for a same gray level. If areas of the reflection electrodes of each pixel units are provided to be inconsistent, it may result in inconsistent brightnesses of each of pixel units. Similarly, if areas of the transmission electrodes are inconsistent, such problem may also exist. Therefore, in order to further increase the display effect, in the present embodiment, the areas of all reflection electrodes are provided to be the same, the areas of all transmission electrodes are also the same, which may achieve a uniform display effect.

An organic film is provided between the reflection electrode and the transmission electrode in the array substrate described above. Inside the pixel unit, the function of the organic film is to adjust the cell gap of the reflection electrode to be a half of the cell gap of the transmission electrode, thereby an adjusting function for an optical path difference is achieved. At a same time, the organic film has a function of making the reflection electrode and the transmission electrode which are adjacent to each other to be electrically insulated at the edge region of the pixel unit.

The array substrate according to the present embodiment has a very high light transmittance. In the array substrate shown in Fig.14, transmission areas are only occupied at a corner (as shown in Fig.15) where the data line 315 is provided on the second pixel unit 3200 and the second pixel unit 3400 and at a transmission electrode place where a common electrode line 314 is provided in the second pixel unit, and there are totally two places which may influence the aperture ratio of the transmission region. Taking the pixel unit 3100, the pixel unit 3200, the pixel unit 3300, the pixel unit 3400, the pixel unit 3500, the pixel unit 3600, the pixel unit 3700, the pixel unit 3800 and the pixel unit 3900 which lengths and widths are all 141µm as an example, suppose area of each triangle at a deflection place is 50µm2, area occupied by each segment of the common electrode line at a transmission electrode place is 72µm2, and the inventor calculates the aperture ratio as below:
an effective display area of the first pixel unit is 141*141=19981µm²,
a total area of the second pixel unit is also 141*141=19981*µm²,
in which, the area of transmission light occupied by the data line is 50*4=200µm²,
the area of transmission light occupied by the common electrode line is 72*2=144µm²,
then, an effective display area of the second pixel unit is 19981-200-144=19637µm², and
the aperture ratio of the array substrate is (19981+19637) /19981*2=99.14%.

The aperture ratio of the array substrate according to the present embodiment is up to 99.14%, which can not be obtained in the prior art. It is noted that in other embodiments a common electrode line and a gate line may be provided in different layers, and the common electrode line may be also provided in a polyline similar to the gate line or a data line. Based on the present embodiment, an aperture ratio may further be increased.

The present invention further provides a liquid crystal display panel including a thin film transistor array substrate illustrated in any embodiment described above.

Specifically, the liquid crystal display panel further includes a color film substrate. The color film substrate is only provided with a plurality of color photoresists, a planarizing layer and a common electrode layer of color film substrate. The plurality of color photoresists correspond to a plurality of pixel units.

In a conventional liquid crystal display panel, a black matrix is also provided on the color film substrate. In the prior art, since a data line, a gate line and a common electrode line all occupy transmission light regions, and all have reflectivenesses dut to formation from metal, if the black matrix having a property of non-transmission light is not employed to shelter the data line, the gate line and the common electrode line, the reflection of the metal may influence a display. However, with an influence of deviation when the color film substrate is jointed in contraposition with the array substrate, the black matrix is generally greatly wider than a metal wiring to be sheltered so as to ensure sheltering the metal wiring, but this may sacrifice a very large display area. In the liquid crystal display panel according to the present invention, since most parts of the gate line, the data line and the common electrode line are all provided under reflection electrodes and all occupie a very small transmission region, therefore a black matrix is not needed in the liquid crystal display panel according to the present invention, and an aperture ratio is increased while a display effect is ensured.

The description above shows embodiments of the present invention. Modifcations of the embodiments which fall within the scope of the appended claims also do form part of the present invention.

## Claims

1. An array substrate for a liquid crystal display panel, comprising a plurality of gate lines (313) and data lines (315),
wherein first pixel units (3100, 3300, 3500, 3700, 3900) and second pixel units (3200, 3400, 3600, 3800) are arranged alternately in a matrix which is defined by intersection of the plurality of gate lines (313) provided in a row direction and the plurality of data lines (315) provided in a column direction, such that the first pixel units are adjacent to only second pixel units in upper, lower, left and right directions and the second pixel units are adjacent to only first pixel units in upper, lower, left and right directions, wherein each of the first and second pixel units comprises a thin film transistor (3103, 3203) and a storage capacitor (3103),
wherein each first pixel unit (3100, 3300, 3500, 3700, 3900) comprises at an edge region a reflection electrode (3102) driven by the thin film transistor of the first pixel unit, and
wherein each second pixel unit (3200, 3400, 3600, 3800) comprises at an edge region a transmission electrode (3201) driven by the thin film transistor of the second pixel unit,
**characterized in that** the reflection electrode of each first pixel unit is directly adjacent to the transmission electrode of any second pixel unit directly adjacent in one of the four directions and the transmission electrode of each second pixel unit is directly adjacent to the reflection electrode of any first pixel unit adjacent in one of the four directions.

2. The array substrate according to claim 1, wherein an insulating layer is provided between the reflection electrode of each first pixel unit and the transmission electrode of each second pixel unit, that are directly adjacent.

3. The array substrate according to claim 2, wherein a plurality of first pixel units (3100, 3300, 3500, 3700, 3900) are arranged in a row direction, a plurality of second pixel units (3200, 3400, 3600, 3800) are arranged in a row direction, and the first pixel units and the second pixel units are spaced apart in the row direction.

4. The array substrate according to claim 2, wherein a plurality of first pixel units are arranged in columns, a plurality of second pixel units are arranged in columns, first pixel units and the second pixel units are spaced apart in the column direction.

5. The array substrate according to claim 2, wherein a plurality of first pixel units and a plurality of second pixel units are spaced apart in both the row direction and the column direction.

6. The array substrate according to claim 3, wherein a gate line driving the row of the plurality of the first pixel units is provided under the reflection electrode located at an edge of each of the first pixel units in the row.

7. The array substrate according to claim 3, wherein a gate line driving the row of the second pixel units is provided under the reflection electrode located at an edge of each of the first pixel units in the row of the first pixel units which is adjacent to the row of the plurality of second pixel units.

8. The array substrate according to claim 3, wherein a common electrode line of the row of the plurality of pixel units is provided under the reflection electrode located at an edge of each of the first pixel units in the row.

9. The array substrate according to claim 3, wherein a common electrode line of the row of the second pixel units is provided under the reflection electrode located at an edge of each of the first pixel units in the row of the first pixel units which is adjacent to the row of the second pixel units.

10. The array substrate according to claim 4, wherein a data line driving the column of the first pixel units is provided under the reflection electrode located at an edge of each of the first pixel units in the column.

11. The array substrate according to claim 4, wherein a data line driving the column of the second pixel units is provided under the reflection electrode located at an edge of each of the first pixel units in the column of the first pixel units which is adjacent to the column of the second pixel units.

12. The array substrate according to claim 5, wherein each gate line is provided in parallel under the reflection electrodes located at the edge of the plurality of first pixel units in two adjacent rows of the pixel units, and each gate line is bended at adjacent corners of any two first pixel units whose corners are adjacent in two adjacent rows of the pixel units.

13. The array substrate according to claim 5, wherein each data line is provided in parallel under the reflection electrodes located at the edge of the first pixel units in two adjacent columns of the pixel units, and each data line is bended at adjacent corners of any two first pixel units whose corners are adjacent in two adjacent rows of the pixel units.

14. The array substrate according to claim 1, wherein the thin film transistor controlling the first pixel unit is provided under the reflection electrode located at an edge of the first pixel unit.

15. The array substrate according to claim 1, wherein the thin film transistor controlling the second pixel unit is provided under the reflection electrode located at an edge of the first pixel unit which is adjacent to the second pixel unit.

16. The array substrate according to claim 1, wherein the storage capacitor of the first pixel unit is provided under the reflection electrode located at an edge of the first pixel unit.

17. The array substrate according to claim 1, wherein the storage capacitor of the second pixel unit is provided under the reflection electrode located at an edge of the first pixel unit which is adjacent to the second pixel unit.

18. The array substrate according to claim 16, wherein an upper plate of the storage capacitor is a drain electrode of the thin film transistor, and a lower plate of the storage capacitor is a common electrode line.

19. The array substrate according to claim 1, wherein a central region of the first pixel unit is provided with a reflection electrode.

20. The array substrate according to claim 19, wherein the reflection electrode located in the central region of the first pixel unit and the reflection electrode located at an edge of the first pixel unit are formed by a same reflection metal layer and are directly connected.

21. The array substrate according to claim 1, wherein a central region of the pixel unit is provided with a transmission electrode.

22. The array substrate according to claim 21, wherein the shape of the transmission electrode located in the central region of the first pixel unit is a circle, a rectangle or a rhombus.

23. The array substrate according to claim 21, wherein the transmission electrode located in the central region of the first pixel unit is electrically connected with the reflection electrode located at an edge of the first pixel unit.

24. The array substrate according to claim 21, wherein an organic film is provided between the transmission electrode of the first pixel unit and the reflection electrode of the first pixel unit, so as to adjust the cell gap of the reflection electrode to be a half of the cell gap of the transmission electrode.

25. The array substrate according to claim 21, wherein the transmission electrodes of all first pixel units have the same area.

26. The array substrate according to claim 21, wherein the area of the transmission electrode located at an edge of the second pixel unit is same as the area of the transmission electrode located in the central region of the first pixel unit.

27. The array substrate according to claim 1, wherein a central region of the second pixel unit is provided with a transmission electrode.

28. The array substrate according to claim 27, wherein the transmission electrode located in the central region of the second pixel unit and the transmission electrode located at an edge of the second pixel unit are formed by a same transparent conductive layer and are directly connected.

29. The array substrate according to claim 1, wherein a central region of the second pixel unit is provided with a reflection electrode.

30. The array substrate according to claim 29, wherein the shape of the reflection electrode located in the central region of the second pixel unit is a circle, a rectangle or a rhombus.

31. The array substrate according to claim 29, wherein the reflection electrode located in the central region of the second pixel unit is electrically connected with the transmission electrode located at an edge of the second pixel unit.

32. The array substrate according to claim 29, wherein an organic film is provided between the transmission electrode of the second pixel unit and the reflection electrode of the second pixel unit, so as to adjust the cell gap of the reflection electrode to be a half of a cell gap of the transmission electrode.

33. The array substrate according to claim 29, wherein the reflection electrodes of all second pixel units have the same area.

34. The array substrate according to claim 33, wherein the area of the reflection electrode located at an edge of the first pixel unit is same as the area of the reflection electrode located in the central region of the second pixel unit.

35. The array substrate according to claim 26, wherein the areas of the transmission electrodes of the first pixel units are same as the areas of the transmission electrodes of the second pixel units, and the areas of the reflection electrodes of the first pixel units are same as the areas of the reflection electrodes of the second pixel units.

36. A liquid crystal display panel, comprising the array substrate according to claim 1.

37. The liquid crystal display panel according to claim 36, further comprising a color film substrate, wherein the color film substrate is only provided with a plurality of color photoresists, a planarizing layer and a common electrode on the color film substrate, and the plurality of color photoresists correspond to the plurality of pixel units.

## Patentansprüche

1. Array-Substrat für ein Flüssigkristallanzeigefeld, umfassend
eine Vielzahl von Gateleitungen (313) und Datenleitungen (315),
wobei erste Pixeleinheiten (3100, 3300, 3500, 3700, 3900) und zweite Pixeleinheiten (3200, 3400, 3600, 3800) alternierend in einer Matrix angeordnet sind, die durch einen Schnittpunkt der Vielzahl von Gateleitungen (313), die in einer Zeilenrichtung bereitgestellt sind, und der Vielzahl von Datenlinien (315), die in einer Spaltenrichtung bereitgestellt sind, definiert ist, sodass die ersten Pixeleinheiten in der oberen, unteren, linken und rechten Richtung nur zu zweiten Pixeleinheiten benachbart sind und die zweiten Pixeleinheiten in der oberen, unteren, linken und rechten Richtung nur zu ersten Pixeleinheiten benachbart sind, wobei jede der ersten und zweiten Pixeleinheiten einen Dünnfilmtransistor (3103, 3203) und einen Speicherkondensator (3103) umfasst,
wobei jede erste Pixeleinheit (3100, 3300, 3500, 3700, 3900) eine Reflexionselektrode (3102) in einem Randbereich umfasst, die durch den Dünnfilmtransistor der ersten Pixeleinheit angetrieben wird, und
wobei jede zweite Pixeleinheit (3200, 3400, 3600, 3800) eine Übertragungselektrode (3201) in einem Randbereich umfasst, die durch den Dünnfilmtransistor der zweiten Pixeleinheit angetrieben wird,
**dadurch gekennzeichnet, dass** die Reflexionselektrode von jeder ersten Pixeleinheit direkt benachbart zu der Übertragungselektrode einer zweiten Pixeleinheit ist, die in einer der vier Richtungen direkt benachbart ist, und die Übertragungselektrode jeder zweiten Pixeleinheit direkt benachbart zu der Reflexionselektrode einer ersten Pixeleinheit ist, die in einer der vier Richtungen benachbart ist.

2. Array-Substrat nach Anspruch 1, wobei eine Isolierschicht zwischen der Reflexionselektrode jeder ersten Pixeleinheit und der Übertragungselektrode jeder zweiten Pixeleinheit bereitgestellt ist, die direkt benachbart sind.

3. Array-Substrat nach Anspruch 2, wobei eine Vielzahl von ersten Pixeleinheiten (3100, 3300, 3500, 3700, 3900) in einer Zeilenrichtung angeordnet sind, eine Vielzahl von zweiten Pixeleinheiten (3200, 3400, 3600, 3800) in einer Zeilenrichtung angeordnet sind und die ersten Pixeleinheiten und die zweiten Pixeleinheiten in der Zeilenrichtung voneinander beabstandet sind.

4. Array-Substrat nach Anspruch 2, wobei eine Vielzahl von ersten Pixeleinheiten in Spalten angeordnet sind, eine Vielzahl von zweiten Pixeleinheiten in Spalten angeordnet sind, erste Pixeleinheiten und die zweiten Pixeleinheiten in der Spaltenrichtung voneinander beabstandet sind.

5. Array-Substrat nach Anspruch 2, wobei eine Vielzahl von ersten Pixeleinheiten und eine Vielzahl von zweiten Pixeleinheiten sowohl in der Zeilenrichtung als auch der Spaltenrichtung voneinander beabstandet sind.

6. Array-Substrat nach Anspruch 3, wobei eine Gateleitung, die die Zeile der Vielzahl der ersten Pixeleinheiten antreibt, unter der Reflexionselektrode bereitgestellt ist, die an einem Rand jeder der ersten Pixeleinheiten in der Zeile angeordnet ist.

7. Array-Substrat nach Anspruch 3, wobei eine Gateleitung, die die Zeile der zweiten Pixeleinheiten antreibt, unter der Reflexionselektrode bereitgestellt ist, die an einem Rand jeder der ersten Pixeleinheiten in der Zeile der ersten Pixeleinheiten angeordnet ist, die zu der Zeile der Vielzahl von zweiten Pixeleinheiten benachbart ist.

8. Array-Substrat nach Anspruch 3, wobei eine gemeinsame Elektrodenleitung der Zeile der Vielzahl von Pixeleinheiten unter der Reflexionselektrode bereitgestellt ist, die an einem Rand jeder der ersten Pixeleinheiten in der Zeile angeordnet ist.

9. Array-Substrat nach Anspruch 3, wobei eine gemeinsame Elektrodenleitung der Zeile der zweiten Pixeleinheiten unter der Reflexionselektrode bereitgestellt ist, die an einem Rand jeder der ersten Pixeleinheiten in der Zeile der ersten Pixeleinheiten angeordnet ist, die zu der Zeile der zweiten Pixeleinheiten benachbart ist.

10. Array-Substrat nach Anspruch 4, wobei eine Datenleitung, die die Spalte der ersten Pixeleinheiten antreibt, unter der Reflexionselektrode bereitgestellt ist, die an einem Rand jeder der ersten Pixeleinheiten in der Spalte angeordnet ist.

11. Array-Substrat nach Anspruch 4, wobei eine Datenleitung, die die Spalte der zweiten Pixeleinheiten antreibt, unter der Reflexionselektrode bereitgestellt ist, die an einem Rand jeder der ersten Pixeleinheiten in der Spalte der ersten Pixeleinheiten angeordnet ist, die zu der Spalte der zweiten Pixeleinheiten benachbart ist.

12. Array-Substrat nach Anspruch 5, wobei jede Gateleitung parallel unter den Reflexionselektroden bereitgestellt ist, die sich am Rand der Vielzahl von ersten Pixeleinheiten in zwei benachbarten Zeilen der Pixeleinheiten befinden, und jede Gateleitung an benachbarten Ecken von jeweils zwei ersten Pixeleinheiten gebogen ist, deren Ecken in zwei benachbarten Zeilen der Pixeleinheiten benachbart sind.

13. Array-Substrat nach Anspruch 5, wobei jede Datenleitung parallel unter den Reflexionselektroden bereitgestellt ist, die sich am Rand der ersten Pixeleinheiten in zwei benachbarten Spalten der Pixeleinheiten befinden, und jede Datenleitung an benachbarten Ecken von jeweils zwei ersten Pixeleinheiten gebogen ist, deren Ecken in zwei benachbarten Zeilen der Pixeleinheiten benachbart sind.

14. Array-Substrat nach Anspruch 1, wobei der Dünnfilmtransistor, der die erste Pixeleinheit steuert, unter der Reflexionselektrode bereitgestellt ist, die an einem Rand der ersten Pixeleinheit angeordnet ist.

15. Array-Substrat nach Anspruch 1, wobei der Dünnfilmtransistor, der die zweite Pixeleinheit steuert, unter der Reflexionselektrode bereitgestellt ist, die an einem Rand der ersten Pixeleinheit angeordnet ist, die zu der zweiten Pixeleinheit benachbart ist.

16. Array-Substrat nach Anspruch 1, wobei der Speicherkondensator der ersten Pixeleinheit unter der Reflexionselektrode bereitgestellt ist, die an einem Rand der ersten Pixeleinheit angeordnet ist.

17. Array-Substrat nach Anspruch 1, wobei der Speicherkondensator der zweiten Pixeleinheit unter der Reflexionselektrode bereitgestellt ist, die an einem Rand der ersten Pixeleinheit angeordnet ist, die zu der zweiten Pixeleinheit benachbart ist.

18. Array-Substrat nach Anspruch 16, wobei eine obere Platte des Speicherkondensators eine Drainelektrode des Dünnfilmtransistors ist und eine untere Platte des Speicherkondensators eine gemeinsame Elektrodenleitung ist.

19. Array-Substrat nach Anspruch 1, wobei ein mittlerer Bereich der ersten Pixeleinheit mit einer Reflexionselektrode bereitgestellt ist.

20. Array-Substrat nach Anspruch 19, wobei die Reflexionselektrode, die in dem mittleren Bereich der ersten Pixeleinheit angeordnet ist, und die Reflexionselektrode, an einem Rand der ersten Pixeleinheit angeordnet ist, durch eine gleiche Metallreflexionsschicht gebildet sind und direkt verbunden sind.

21. Array-Substrat nach Anspruch 1, wobei ein mittlerer Bereich der Pixeleinheit mit einer Übertragungselektrode bereitgestellt ist.

22. Array-Substrat nach Anspruch 21, wobei die Form der Übertragungselektrode, die in dem mittleren Bereich der ersten Pixeleinheit angeordnet ist, ein Kreis, ein Rechteck oder eine Raute ist.

23. Array-Substrat nach Anspruch 21, wobei die Übertragungselektrode, die in dem mittleren Bereich der ersten Pixeleinheit angeordnet ist, elektrisch mit der Reflexionselektrode verbunden ist, die an einem Rand der ersten Pixeleinheit angeordnet ist.

24. Array-Substrat nach Anspruch 21, wobei ein organischer Film zwischen der Übertragungselektrode der ersten Pixeleinheit und der Reflexionselektrode der ersten Pixeleinheit bereitgestellt ist, um den Zellenabstand der Reflexionselektrode anzupassen, eine Hälfte des Zellenabstands der Transmissionselektrode zu sein.

25. Array-Substrat nach Anspruch 21, wobei die Übertragungselektroden aller ersten Pixeleinheiten dieselbe Fläche aufweisen.

26. Array-Substrat nach Anspruch 21, wobei die Fläche der Übertragungselektrode, die an einer Kante der zweiten Pixeleinheit angeordnet ist, dieselbe ist wie die Fläche der Transmissionselektrode, die in dem mittleren Bereich der ersten Pixeleinheit angeordnet ist.

27. Array-Substrat nach Anspruch 1, wobei ein mittlerer Bereich der zweiten Pixeleinheit mit einer Übertragungselektrode bereitgestellt ist.

28. Array-Substrat nach Anspruch 27, wobei die Übertragungselektrode, die in dem mittleren Bereich der zweiten Pixeleinheit angeordnet ist, und die Übertragungselektrode, die an einem Rand der zweiten Pixeleinheit angeordnet ist, durch eine gleiche transparente leitende Schicht gebildet sind und direkt verbunden sind.

29. Array-Substrat nach Anspruch 1, wobei ein mittlerer Bereich der zweiten Pixeleinheit mit einer Reflexionselektrode bereitgestellt ist.

30. Array-Substrat nach Anspruch 29, wobei die Form der Reflexionselektrode, die in dem mittleren Bereich der zweiten Pixeleinheit angeordnet ist, ein Kreis, ein Rechteck oder eine Raute ist.

31. Array-Substrat nach Anspruch 29, wobei die Reflexionselektrode, die in dem mittleren Bereich der zweiten Pixeleinheit angeordnet ist, elektrisch mit der Transmissionselektrode verbunden ist, die an einem Rand der zweiten Pixeleinheit angeordnet ist.

32. Array-Substrat nach Anspruch 29, wobei ein organischer Film zwischen der Übertragungselektrode der zweiten Pixeleinheit und der Reflexionselektrode der zweiten Pixeleinheit bereitgestellt ist, um den Zellenabstand der Reflexionselektrode anzupassen, eine Hälfte eines Zellenabstands der Transmissionselektrode zu sein.

33. Array-Substrat nach Anspruch 29, wobei die Reflexionselektroden aller zweiten Pixeleinheiten dieselbe Fläche aufweisen.

34. Array-Substrat nach Anspruch 33, wobei die Fläche der Reflexionselektrode, die an einer Kante der ersten Pixeleinheit angeordnet ist, dieselbe ist wie die Fläche der Reflexionselektrode, die in dem mittleren Bereich der zweiten Pixeleinheit angeordnet ist.

35. Array-Substrat nach Anspruch 26, wobei die Flächen der Übertragungselektroden der ersten Pixeleinheiten dieselben sind wie die Flächen der Übertragungselektroden der zweiten Pixeleinheiten und die Flächen der Reflexionselektroden der ersten Pixeleinheiten dieselben sind wie die Flächen der Reflexionselektroden der zweiten Pixeleinheiten.

36. Flüssigkristallanzeigefeld, umfassend das Array-Substrat nach Anspruch 1.

37. Flüssigkristallanzeigefeld nach Anspruch 36, ferner umfassend ein Farbfilmsubstrat, wobei das Farbfilmsubstrat nur mit einer Vielzahl von Farbfotoresists, einer Planarisierungsschicht und einer gemeinsamen Elektrode auf dem Farbfilmsubstrat bereitgestellt ist und die Vielzahl von Farbfotoresists der Vielzahl von Pixeleinheiten entsprechen.

## Revendications

1. Substrat matriciel pour un panneau d'affichage à cristaux liquides, comprenant :
une pluralité de lignes de grille (313) et de lignes de données (315),
dans lequel des premières unités de pixel (3100, 3300, 3500, 3700, 3900) et des deuxièmes unités de pixel (3200, 3400, 3600, 3800) sont agencées de manière alternative dans une matrice qui est définie par une intersection de la pluralité de lignes de grille (313) prévues dans une direction des rangées et la pluralité de lignes de données (315) prévues dans une direction des colonnes, de telle sorte que les premières unités de pixel sont adjacentes uniquement aux deuxièmes unités de pixel dans les directions plus haute, plus basse, gauche et droite et les deuxièmes unités de pixel sont adjacentes uniquement aux premières unités de pixel dans les directions plus haute, plus basse, gauche et droite où chacune des premières et deuxièmes unités de pixel comprend un transistor en couches minces (3103, 3203) et un condensateur de stockage (3103),
dans lequel chaque première unité de pixel (3100, 3300, 3500, 3700, 3900) comprend au niveau d'une zone de bord une électrode de réflexion (3102) entraînée par le transistor en couches minces de la première unité de pixel, et
dans lequel chaque deuxième unité de pixel (3200, 3400, 3600, 3800) comprend au niveau d'une zone de bord une électrode de transmission (3201) entraînée par le transistor en couches minces de la deuxième unité de pixel,
**caractérisé en ce que** l'électrode de réflexion de chaque première unité de pixel est directement adjacente à l'électrode de transmission d'une quelconque deuxième unité de pixel directement adjacente dans l'une des quatre directions et l'électrode de transmission de chaque deuxième unité de pixel est directement adjacente à l'électrode de réflexion d'une quelconque première unité de pixel adjacente dans l'une des quatre directions.

2. Substrat matriciel selon la revendication 1, dans lequel une couche isolante est prévue entre l'électrode de réflexion de chaque première unité de pixel et l'électrode de transmission de chaque deuxième unité de pixel, qui sont directement adjacentes.

3. Substrat matriciel selon la revendication 2, dans lequel une pluralité de premières unités de pixel (3100, 3300, 3500, 3700, 3900) sont agencées dans une direction de rangées, une pluralité de deuxièmes unités de pixel (3200, 3400, 3600, 3800) sont agencées dans une direction de rangées, et les premières unités de pixel et les deuxièmes unités de pixel sont espacées les unes des autres dans la direction des rangées.

4. Substrat matriciel selon la revendication 2, dans lequel une pluralité de premières unités de pixel sont agencées en colonnes, une pluralité de deuxièmes unités de pixel sont agencées dans des colonnes, les premières unités de pixel et les deuxièmes unités de pixel sont espacées les unes des autres dans la direction des colonnes.

5. Substrat matriciel selon la revendication 2, dans lequel une pluralité de premières unités de pixel et une pluralité de deuxièmes unités de pixel sont espacées les unes des autres à la fois dans la direction des rangées et la direction des colonnes.

6. Substrat matriciel selon la revendication 3, dans lequel une ligne de grille entraînant la rangée de la pluralité de premières unités de pixel est prévue sous l'électrode de réflexion située au niveau d'un bord de chacune des premières unités de pixel dans la rangée.

7. Substrat matriciel selon la revendication 3, dans lequel une ligne de grille entraînant la rangée des deuxièmes unités de pixel est prévue sous l'électrode de réflexion située au niveau d'un bord de chacune des premières unités de pixel dans la rangée des premières unités de pixel qui est adjacente à la rangée de la pluralité des deuxièmes unités de pixel.

8. Substrat matriciel selon la revendication 3, dans lequel une ligne d'électrode commune de la rangée de la pluralité d'unités de pixel est prévue sous l'électrode de réflexion située au niveau d'un bord de chacune des premières unités de pixel dans la rangée.

9. Substrat matriciel selon la revendication 3, dans lequel une ligne d'électrode commune de la rangée des deuxièmes unités de pixel est prévue sous l'électrode de réflexion située au niveau d'un bord de chacune des premières unités de pixel dans la rangée des premières unités de pixel qui est adjacente à la rangée des deuxièmes unités de pixel.

10. Substrat matriciel selon la revendication 4, dans lequel une ligne de données entraînant la colonne des premières unités de pixel est prévue sous l'électrode de réflexion située au niveau d'un bord de chacune des premières unités de pixel dans la colonne.

11. Substrat matriciel selon la revendication 4, dans lequel une ligne de données entraînant la colonne des deuxièmes unités de pixel est prévue sous l'électrode de réflexion située au niveau d'un bord de chacune des premières unités de pixel dans la colonne des premières unités de pixel qui est adjacente à la colonne des deuxièmes unités de pixel.

12. Substrat matriciel selon la revendication 5, dans lequel chaque ligne de grille est prévue en parallèle aux électrodes de réflexion situées au niveau du bord de la pluralité de premières unités de pixel dans deux rangées adjacentes des unités de pixel, et chaque ligne de grille est courbée au niveau de coins adjacents de l'une quelconque de deux premières unités de pixel dont les coins sont adjacents dans deux rangées adjacentes des unités de pixel.

13. Substrat matriciel selon la revendication 5, dans lequel chaque ligne de donnée est prévue en parallèle aux électrodes de réflexion situées au niveau du bord des premières unités de pixel dans deux colonnes adjacentes des unités de pixel, et chaque ligne de grille est courbée au niveau de coins adjacents de l'une quelconque de deux premières unités de pixel dont les coins sont adjacents dans deux rangées adjacentes des unités de pixel.

14. Substrat matriciel selon la revendication 1, dans lequel le transistor en couches minces commandant la première unité de pixel est prévu sous l'électrode de réflexion située au niveau d'un bord de la première unité de pixel.

15. Substrat matriciel selon la revendication 1, dans lequel le transistor en couches minces commandant la deuxième unité de pixel est prévu sous l'électrode de réflexion située au niveau d'un bord de la première unité de pixel qui est adjacente à la deuxième unité de pixel.

16. Substrat matriciel selon la revendication 1, dans lequel le condensateur de stockage de la première unité de pixel est prévu sous l'électrode de réflexion située au niveau d'un bord de la première unité de pixel.

17. Substrat matriciel selon la revendication 1, dans lequel le condensateur de stockage de la deuxième unité de pixel est prévu sous l'électrode de réflexion située au niveau d'un bord de la première unité de pixel qui est adjacente à la deuxième unité de pixel.

18. Substrat matriciel selon la revendication 16, dans lequel une plaque supérieure du condensateur de stockage est une électrode drain du transistor en couches minces, et une plaque inférieure du condensateur de stockage est une ligne d'électrode commune.

19. Substrat matriciel selon la revendication 1, dans lequel une zone centrale de la première unité de pixel est pourvue d'une électrode de réflexion.

20. Substrat matriciel selon la revendication 19, dans lequel l'électrode de réflexion située dans la zone centrale de la première unité de pixel et l'électrode de réflexion située au niveau d'un bord de la première unité de pixel sont formées par une même couche métallique de réflexion et sont directement connectées.

21. Substrat matriciel selon la revendication 1, dans lequel une zone centrale de l'unité de pixel est pourvue d'une électrode de transmission.

22. Substrat matriciel selon la revendication 21, dans lequel la forme de l'électrode de transmission située dans la zone centrale de la première unité de pixel est un cercle, un rectangle ou un losange.

23. Substrat matriciel selon la revendication 21, dans lequel l'électrode de transmission située dans la zone centrale de la première unité de pixel est connectée électriquement à l'électrode de réflexion située au niveau d'un bord de la première unité de pixel.

24. Substrat matriciel selon la revendication 21, dans lequel un film organique est prévu entre l'électrode de transmission de la première unité de pixel et l'électrode de réflexion de la première unité de pixel, de sorte d'ajuster l'écart entre cellules de l'électrode de réflexion pour qu'il soit la moitié de l'écart entre cellules de l'électrode de transmission.

25. Substrat matriciel selon la revendication 21, dans lequel les électrodes de transmission de l'ensemble des premières unités de pixel ont la même surface.

26. Substrat matriciel selon la revendication 21, dans lequel la surface de l'électrode de transmission située au niveau d'un bord de la deuxième unité de pixel est la même que la surface de l'électrode de transmission située dans la zone centrale de la première unité de pixel.

27. Substrat matriciel selon la revendication 1, dans lequel une zone centrale de la deuxième unité de pixel est pourvue d'une électrode de transmission.

28. Substrat matriciel selon la revendication 27, dans lequel l'électrode de transmission située dans la zone centrale de la deuxième unité de pixel et l'électrode de transmission située au niveau d'un bord de la deuxième unité de pixel sont formées par une même couche conductrice transparente et sont directement connectées.

29. Substrat matriciel selon la revendication 1, dans lequel une zone centrale de la deuxième unité de pixel est pourvue d'une électrode de réflexion.

30. Substrat matriciel selon la revendication 29, dans lequel la forme de l'électrode de réflexion située dans la zone centrale de la deuxième unité de pixel est un cercle, un rectangle ou un losange.

31. Substrat matriciel selon la revendication 29, dans lequel l'électrode de réflexion située dans la zone centrale de la deuxième unité de pixel est connectée électriquement à l'électrode de transmission située au niveau d'un bord de la deuxième unité de pixel.

32. Substrat matriciel selon la revendication 29, dans lequel un film organique est prévu entre l'électrode de transmission de la deuxième unité de pixel et l'électrode de réflexion de la deuxième unité de pixel, de sorte d'ajuster l'écart entre cellules de l'électrode de réflexion pour qu'il soit la moitié de l'écart entre cellules de l'électrode de transmission.

33. Substrat matriciel selon la revendication 29, dans lequel les électrodes de réflexion de l'ensemble des deuxièmes unités de pixel ont la même surface.

34. Substrat matriciel selon la revendication 33, dans lequel la surface de l'électrode de réflexion située au niveau d'un bord de la première unité de pixel est la même que la surface de l'électrode de réflexion située dans la zone centrale de la deuxième unité de pixel.

35. Substrat matriciel selon la revendication 26, dans lequel les surfaces des électrodes de transmission des premières unités de pixel sont les mêmes que les surfaces des électrodes de transmission des deuxièmes unités de pixel, et les surfaces des électrodes de réflexion des premières unités de pixel sont les mêmes que les surfaces des électrodes de réflexion des deuxièmes unités de pixel.

36. Panneau d'affichage à cristaux liquides, comprenant le substrat matriciel selon la revendication 1.

37. Panneau d'affichage à cristaux liquides selon la revendication 36, comprenant en outre un substrat de film couleur, dans lequel le substrat de film couleur est uniquement pourvu d'une pluralité de résines photosensibles couleur, d'une couche de planarisation et une électrode commune sur le substrat de film couleur, et la pluralité de résines photosensibles couleur correspond à la pluralité d'unités de pixel.
